# EUROPÄISCHE PATENTANMELDUNG

(11) **EP 4 521 735 A1**
(43) Veröffentlichungstag der Anmeldung: **12.03.2025**
(21) Anmeldenummer: 24198178.6
(22) Anmeldetag: 03.09.2024
(51) Int. Cl.: H04N 7/18, G01N 21/00, G01N 21/89, H04N 21/4223, H04N 21/4363, H04N 21/643

(54) **BEOBACHTUNG UND/ODER INSPEKTION EINER MATERIALBAHN**

(30) Priorität: 06.09.2023 DE 102023123992
(71) Anmelder: Texmag GmbH Vertriebsgesellschaft, 8800 Thalwil (CH)
(72) Erfinder: NENNSTIEL, Tobias, 86391 Stadtbergen (DE)
(74) Vertreter: Peterreins Schley

(57) **Zusammenfassung**

Ein erster Aspekt der vorliegenden Offenbarung betrifft eine Vorrichtung zur Beobachtung und/oder Inspektion einer Materialbahn, umfassend eine erste Kameraeinheit zur Erfassung von ersten Bilddaten der Materialbahn; eine erste Recheneinheit, die mit der ersten Kameraeinheit über eine erste Kameraverbindungsleitung verbunden ist, dafür ausgelegt, die ersten Bilddaten zu empfangen und, optional, zu bearbeiten; und eine zweite Recheneinheit, dafür ausgelegt, die ersten Bilddaten von der ersten Recheneinheit zu empfangen und, optional, zu bearbeiten. Die erste Recheneinheit und die zweite Recheneinheit sind über eine erste USB-Leitung verbunden. Die ersten Bilddaten werden über die erste USB-Leitung an die zweite Recheneinheit übertragen. Die erste Recheneinheit umfasst eine erste USB-Schnittstelle und die zweite Recheneinheit eine zweite USB-Schnittstelle, wobei die erste USB-Schnittstelle und die zweite USB-Schnittstelle über die erste USB-Leitung verbunden sind, wobei die erste USB-Schnittstelle und die zweite USB-Schnittstelle in ein Netzwerk eingebunden sind. Ein weiterer Aspekt der vorliegenden Offenbarung betrifft eine Vorrichtung zur Bearbeitung einer Materialbahn, umfassend die Materialbahn und die Vorrichtung zur Beobachtung und/oder Inspektion der Materialbahn.

## Beschreibung

### Technisches Gebiet

Die Erfindung betrifft eine Vorrichtung zur Beobachtung und/oder Inspektion einer Materialbahn sowie eine Vorrichtung zur Bearbeitung einer Materialbahn umfassend eine Materialbahn und die Vorrichtung zur Beobachtung und/oder Inspektion der Materialbahn. Insbesondere betrifft die Erfindung die Bilddatenübertragung bei der Beobachtung und/oder Inspektion der Materialbahn.

### Hintergrund

Materialbahnen und Vorrichtungen zu deren Bearbeitung kommen zum Beispiel in der Papier- und Folienindustrie (z.B. in Druckereien) zum Einsatz. Häufig wird eine Materialbahn z.B. aus Papier, Kunststoff und/oder Metall via ein motorisiertes Rollensystem der Vorrichtung in Längsrichtung bewegt. Bewegungen quer zur Längsrichtung können zum Beispiel über sogenannte Drehrahmensysteme innerhalb der Vorrichtung gesteuert werden. In Koordination mit der Bewegung in Längsrichtung kann die Materialbahn mit einem hohen Automatisierungsgrad bearbeitet werden. Bearbeiten kann zum Beispiel Bedrucken, Schneiden und/oder Sortieren umfassen. Die steigenden Geschwindigkeiten der Materialbahnen in Längsrichtung, z.B. mit Geschwindigkeiten bis zu 1300 m/min, erhöhen vorteilhafterweise den Durchsatz, stellen zugleich aber hohe Anforderungen an die Vorrichtungen zur Bearbeitung einer Materialbahn und an Vorrichtungen zur Beobachtung und/oder Inspektion der Materialbahn.

Vorrichtungen zur Beobachtung und/oder Inspektion der Materialbahn können bei der Bearbeitung von Materialbahnen zum Einsatz kommen, zum Beispiel um jederzeit sicherzustellen, dass die automatisierte Bearbeitung vorgegebene Qualitätskriterien erfüllt. Dabei kann neben einer automatisierten Überwachung auch eine Unterstützung einer visuellen Überwachung durch einen Prozessüberwacher (Bediener) vorgesehen sein. Bei dieser Art der Qualitätssicherung wird die Materialbahn unter Beobachtungs- und/oder Inspektionssystemen hindurchgeführt, die Bilder der Materialbahnen aufnehmen. Diese Bilder können dann durch einen Prozessüberwacher (Bediener) oder automatisch überprüft werden. Zum Beispiel kann via eine Vorrichtung zur Beobachtung und/oder Inspektion geprüft werden, ob verschiedene Druckfarben ohne (wahrnehmbaren) Versatz auf die Materialbahn aufgebracht werden oder ob generelle Fehler im Druck bzw. Beschädigungen am Material vorhanden sind usw. USB-Leitungen, die nach dem Standard USB 3.0 oder höher spezifiziert sind, sind im Stand der Technik bekannt. Über den Treiber g_ether aus dem Linux-USB Gadget API Framework kann Ethernet über eine USB-Schnittstelle genutzt werden.

### Zusammenfassung der Erfindung

In Druckereien werden die Produktionsprozesse immer schneller und präziser. Die Qualität der Druckergebnisse steigt stetig und die Makulatur muss dabei auf ein Minimum reduziert werden.

Eine Vorrichtung zur Beobachtung und/oder Inspektion umfasst häufig mindestens eine erste Kameraeinheit, die erste Bilddaten von der Materialbahn erfasst. Bei zunehmend hochaufgelösten ersten Bilddaten und größeren Geschwindigkeiten der Materialbahn (d.h. eine Anforderung an mehr Bilder pro Sekunde) in Längsrichtung entstehen große Datenmengen, die möglichst in Echtzeit an eine erste Recheneinheit zwecks Beobachtung und/oder Inspektion übertragen werden sollen. Dadurch entstehen hohe Übertragungsraten von Bilddaten.

Häufig (aber nicht notwendigerweise) umfasst die Vorrichtung zur Beobachtung und/oder Inspektion mindestens eine zweite Kameraeinheit, die zweite Bilddaten von der Materialbahn, z.B. an unterschiedlichen Positionen der Vorrichtung zur Bearbeitung der Materialbahn, erfasst. Auch diese großen Datenmengen sollen möglichst in Echtzeit an die erste Recheneinheit übertragen werden. Sollen zumindest die ersten und zweiten Bilddaten auf der ersten Recheneinheit möglichst in Echtzeit - d.h. nahezu gleichzeitig - verarbeitet werden, müsste die erste Recheneinheit dafür entsprechend leistungsstark ausgelegt sein. So müsste zum Beispiel die erste Recheneinheit eine dafür geeignete Grafikbearbeitungsleistung umfassen, die für die Verarbeitung der zumindest ersten und zweiten Bilddaten in jeweils hoher Übertragungsrate ausgelegt ist. Eine solche erste Recheneinheit ließe sich allerdings derzeit nicht als effiziente und günstige eingebettete (d.h. z.B. aufgabenspezifische) Recheneinheit realisieren, insbesondere weil die Abwärme zum Beispiel einer Grafikkarte zu groß wäre und/oder Lüfter eingebaut werden müssten. Stattdessen wäre z.B. eine Desktop-Recheneinheit erforderlich, die teurer als zwei eingebettete Recheneinheiten, die jeweils dafür ausgelegt sind, die ersten bzw. zweiten Bilddaten zu verarbeiten, ist. Zudem sind zwei eingebettete Recheneinheiten auch ressourcenschonender als eine Desktop-Recheneinheit.

Eine Desktop-Recheneinheit erwiese sich aber auch insoweit als nachteilig, als Vorrichtungen zur Beobachtung und/oder Inspektion einer Materialbahn in Abhängigkeit der Kundenwünsche und insbesondere modular angeboten werden sollen. Insbesondere sollen möglichst viele Gleichteile für (gemäß den Kundenwünschen) verschiedene Ausführungen der Vorrichtung zur Beobachtung und/oder Inspektion der Materialbahn verwendet werden. Neben Kosteneinsparungen ermöglicht dies auch eine Nachrüstbarkeit. Soll zum Beispiel eine Vorrichtung zur Beobachtung und/oder Inspektion einer Materialbahn nur genau die erste Kameraeinheit umfassen, wäre eine nicht eingebettete Recheneinheit - z.B. eine Desktop-Recheneinheit mit zum Beispiel einer großen Grafikkarte, Lüfter(n) etc. - für die Verarbeitung allein der ersten Bilddaten von der ersten Kameraeinheit überdimensioniert und insbesondere mit einer unnötig großen Leistungsaufnahme verbunden (und erst recht zu teuer, siehe oben). Würden dagegen für diesen Anwendungsfall mit nur genau der ersten Kameraeinheit eine eingebettete Recheneinheit und für andere Anwendungsfälle mit mindestens der ersten und zweiten Kameraeinheit eine große nicht-eingebettete Recheneinheit angeboten, entspräche das nicht der gewünschten Modularität, da die Vorrichtungen, insbesondere deren Software, in Abhängigkeit davon, ob sie eine oder mehrere Kameraeinheiten umfassen, unterschiedlich ausgelegt werden müssten. Weitere extra auszulegende Vorrichtungen, insbesondere deren Software, entstünden, wenn der Kunde nachträglich eine zweite Kameraeinheit anforderte. Eben diese Möglichkeit der Nachrüstbarkeit soll ebenfalls gegeben sein.

Erfindungsgemäß wird daher im Lichte der diskutierten Anforderungen sowohl für die erste als auch für die zweite Kameraeinheit jeweils eine (vorzugsweise eingebettete) Recheneinheit zur Verarbeitung der jeweiligen Bilddaten eingesetzt.

Um in diesem Fall zumindest die ersten und zweiten Bilddaten gleichzeitig zwecks Beobachtung und/oder Inspektion der Materialbahn auf einer Recheneinheit (hier: der zweiten Recheneinheit) analysieren zu können, ist es wünschenswert, mithin notwendig, die ersten Bilddaten von der ersten Recheneinheit zu einer zweiten Recheneinheit möglichst in Echtzeit übertragen zu können.

Wie im Stand der Technik bekannt, kann die erste Recheneinheit mit der zweiten Recheneinheit (zumindest) für die Bilddatenübertragung über Ethernet-Controller und ein Ethernet-Kabel verbunden sein. Im Hinblick auf die bereits diskutierten Anwendungsfälle der Bilddatenübertragung mit zunehmend großen Übertragungsraten sind allerdings Ethernet-Controller sowie Ethernet-Kabel für bis zu 1 Gbit/s nicht mehr ausreichend. In der Tat übersteigt bereits die Übertragungsrate von 120 MB/s, die sich für 20 RGB-Megapixel Bilder - jeweils mit einer Größe von 60 MB - bei einer Bildfrequenz von z.B. 2 Hz ergibt, die bei 1 Gbit/s Ethernet-Controller sowie Ethernet-Kabel (z.B. aufgrund des Overhead in den Ethernet-Frames) real maximal erreichbare Übertragungsrate von etwa 112 MB/s. Schnellere Ethernet-Controller sowie Ethernet-Kabel für z.B. bis zu 10 Gbit/s sind zwar erhältlich, aber mit (derzeit) zu hohen Kosten verbunden. Zudem sind noch höhere Auflösungen (30 RGB-Megapixel Bilder - jeweils mit einer Größe von 90 MB) und höhere Bildfrequenzen (z.B. 15 oder 16 Hz) wünschenswert, für die selbst 10 Gbit/s Ethernet-Controller sowie Ethernet-Kabel nicht mehr ausreichend wären. Aus demselben Grund kommen hier auch keine 2,5- oder 5-Gbit/s Ethernet-Controller sowie Ethernet-Kabel in Frage. Ethernet-Controller sowie Ethernet-Kabel mit Übertragungsraten über 10 Gbit/s wären zwar möglich, sind aber derzeit erst recht zu teuer.

Es kann daher - abgesehen von der Aufteilung einer Recheneinheit in eine erste und eine zweite Recheneinheit - als eine Aufgabe der Erfindung angesehen werden, eine alternative, insbesondere eine (im Vergleich zu z.B. 10 Gbit/s Ethernet-Controller sowie Ethernet-Kabel) kostengünstigere Vorrichtung zur Beobachtung und/oder Inspektion einer Materialbahn anzugeben, bei der Bilddaten von der ersten Recheneinheit zur zweiten Recheneinheit in hinreichend großen Übertragungsraten übertragen werden können.

Zum Beispiel wird diese Aufgabe der Erfindung durch eine Vorrichtung nach einem ersten allgemeinen Aspekt zur Beobachtung und/oder Inspektion einer Materialbahn gelöst. Die Vorrichtung umfasst eine erste Kameraeinheit zur Erfassung von ersten Bilddaten der Materialbahn. Die Vorrichtung umfasst weiterhin eine erste Recheneinheit, die mit der ersten Kameraeinheit über eine erste Kameraverbindungsleitung verbunden ist, wobei die erste Recheneinheit dafür ausgelegt ist, die ersten Bilddaten zu empfangen und, optional, zu bearbeiten. Die Vorrichtung umfasst weiterhin eine zweite Recheneinheit, die dafür ausgelegt ist, die ersten Bilddaten von der ersten Recheneinheit zu empfangen und, optional, zu bearbeiten. Die erste Recheneinheit und die zweite Recheneinheit sind über eine erste USB-Leitung verbunden. Die ersten Bilddaten können über die erste USB-Leitung an die zweite Recheneinheit übertragen werden.

Die Vorrichtung nach dem ersten allgemeinen Aspekt kann eine Schnittstelle umfassen, die mit der zweiten Recheneinheit verbunden und dafür ausgelegt ist, die ersten Bilddaten von der zweiten Recheneinheit zu empfangen und auszugeben. Eine solche Schnittstelle ermöglicht es, gegebenenfalls in den Prozess der Bearbeitung der Materialbahn (manuell) einzugreifen. Dadurch kann zum Beispiel sichergestellt werden, dass die vorgegebenen Qualitätskriterien erfüllt werden und/oder der Ausschuss reduziert wird.

Weitere Ausführungsformen werden in den abhängigen Ansprüchen definiert.

Offenbart wird weiterhin eine Vorrichtung nach einem zweiten allgemeinen Aspekt zur Bearbeitung einer Materialbahn. Die Vorrichtung umfasst die Materialbahn. Die Vorrichtung umfasst weiterhin die Vorrichtung zur Beobachtung und/oder Inspektion der Materialbahn nach dem ersten allgemeinen Aspekt (oder einer Ausführungsform davon).

Die Vorrichtung nach dem ersten allgemeinen Aspekt (oder einer Ausführungsform davon) umfasst zwei Recheneinheiten, wobei Daten, insbesondere Bilddaten von der ersten Recheneinheit über eine USB-Leitung an eine zweite Recheneinheit übertragen werden können.

Wie bereits diskutiert, ist die Verwendung von zwei Recheneinheiten mit Datenübertragung anstelle von einer Recheneinheit aus Gründen z.B. der Effizienz, Modularität und/oder Kosten vorteilhaft, insbesondere wenn effiziente und günstige eingebettete (d.h. z.B. aufgabenspezifische) Recheneinheiten als erste und zweite Recheneinheit vorgesehen werden. Weiterhin kann zum Beispiel in Ausführungsformen, in denen die zweite Recheneinheit mit der Schnittstelle verbunden ist, die erste Recheneinheit (z.B. nahe der ersten Kameraeinheit) an einer anderen Stelle der Materialbahn angeordnet sein als die zweite Recheneinheit (z.B. nahe der Schnittstelle und/oder nahe einer zweiten Kameraeinheit). Andererseits müssen die erste und zweite Recheneinheit nicht weit auseinander angeordnet sein und können vielmehr auch nebeneinander oder nahe beieinander angeordnet sein. Alternativ könnten im letztgenannten Fall die erste Recheneinheit und die zweite Recheneinheit auch durch eine Recheneinheit, insbesondere durch eine nicht-eingebettete Desktop-Recheneinheit, die üblicherweise in einem Schaltschrank platziert würde, realisiert werden. Zwar entfiele durch eine solche Recheneinheit die Notwendigkeit der Datenübertragung zwischen der ersten und der zweiten Recheneinheit. Allerdings kommt eine solche Desktop-Recheneinheit aus den bereits diskutierten Gründen z.B. der Effizienz, Modularität und/oder Kosten hier nicht in Frage.

Konventionell könnten die zwei Recheneinheiten über deren Ethernet-Controller und Ethernet-Kabel (z.B. an einen Ethernet-Switch) verbunden werden. Für die hinreichend schnelle Datenübertragung der großen Bilddaten müssten die Ethernet-Controller sowie das Ethernet-Kabel zumindest auf 2,5 Gbit/s, mitunter sogar auf 10 Gbit/s ausgelegt sein. Solche Hardware ist (derzeit) aber mit zu hohen Kosten verbunden. Dadurch dass die Vorrichtung nach dem ersten allgemeinen Aspekt (oder einer Ausführungsform davon) eine Übertragung via USB-Schnittstellen und eine USB-Leitung anstelle via Ethernet-Controller und eines Ethernet-Kabels bereitstellt, werden diese hohen Kosten vermieden.

Die Vorrichtungen nach dem ersten und zweiten allgemeinen Aspekt basieren auf der Erkenntnis, dass die erste USB-Leitung zwischen der ersten und zweiten Recheneinheit für eine hinreichend schnelle Datenübertragung genutzt werden kann. Vorteilhaft ist dies insbesondere deswegen, da die erste und zweite Recheneinheit selbst im Falle, dass sie als eingebettete Recheneinheiten ausgeführt sind, bereits über geeignete USB-Schnittstellen (z.B. USB 3.0 oder höher spezifiziert) verfügen und insoweit keine Zusatzkosten entstehen.

Besonders vorteilhaft sind Ausführungsformen, in denen die USB-Schnittstellen in ein Netzwerk, insbesondere in ein Ethernet eingebunden werden. Dabei kann ein virtuelles Netzwerkgerät verwendet werden, dessen maximale Burst Einstellung erhöht wurde. Dadurch können mehr Daten gleichzeitig übertragen werden und die Übertragungsrate (gemäß dem gewünschten Anwendungsfall) gesteigert werden. Weiterhin können vorteilhafterweise virtuelle Netzwerkinterfaces in den ersten und zweiten Recheneinheiten verwendet werden, deren jeweilige Maximum Transmission Unit (MTU) erhöht werden. Auch dadurch kann die Übertragungsrate (gemäß dem gewünschten Anwendungsfall) gesteigert werden. Dadurch sind z.B. Bildfrequenzen von 15 Hz möglich, für die selbst 1 Gbit/s Ethernet-Controller sowie Ethernet-Kabel nicht mehr ausreichend wären.

Dank der durch die vorgeschlagenen Vorrichtungen nach dem ersten oder zweiten allgemeinen Aspekt (oder Ausführungsformen davon) erreichbaren Bildübertragungsraten kann zum Beispiel ein Druckprozess von der Einrichtungsphase bis zum Abschluss des Auftrags durch kontinuierliche Darstellung der bedruckten Bahn in höchster Auflösung und Bildqualität unterstützt werden. Die für die Qualität entscheidenden Stellen im Druck, wie z.B. Register- und Farbmarken oder markante Farbflächen, stehen dem Drucker permanent in höchster Auflösung zur Verfügung und sichern damit den Produktionsprozess. Dadurch kann die Produktionsgeschwindigkeit bei zumindest konstanter Qualität des Drucks gesteigert werden. Darüber hinaus kann die Makulatur reduziert werden. Verschiedene Ausführungsformen der Vorrichtungen können besonders vorteilhaft durch Gleichteile realisiert werden. Die Erfindung ermöglicht es, Teile von Vorrichtungen zur Beobachtung und/oder Inspektion einer Materialbahn in exakt der gleichen Konfiguration zu bauen. Dies ermöglicht vorteilhafterweise auch die spätere Nachrüstung z.B. einer zweiten Kameraeinheit. Zudem wird dank der Gleichteile die Lagerhaltung und Wartung erleichtert. Ferner entsteht kein zusätzlicher Aufwand bei der Pflege des Betriebssystems und der Software.

Dank der erfindungsgemäßen Vorrichtungen wird auch erreicht, dass im Falle, dass die Untermenge der Mehrkameraeinheiten nur einen geringeren Anteil der insgesamt verkauften Vorrichtungen zur Beobachtung und/oder Inspektion einer Materialbahn ausmacht, die Kosten für einzelne Vorrichtungen zur Beobachtung und/oder Inspektion einer Materialbahn ohne Mehrkameraeinheiten nicht erhöht werden.

Im Falle einer Vorrichtung zur Beobachtung und/oder Inspektion einer Materialbahn ohne Mehrkameraeinheiten kann eine USB-Schnittstelle, die für die Anbindung einer Recheneinheit an eine andere Recheneinheit genutzt wird, für andere Funktionen wie z.B. Peripheriegeräte genutzt werden. Für die Anbindung an eine Kunden-Recheneinheit ist die Lösung ebenfalls sehr gut geeignet. Es gibt ebenfalls einen Windows Treiber, der die Nutzung auch mit Kunden-Recheneinheiten mit USB-Schnittstellen 3.0 oder höher ermöglicht. Hiermit entfällt die Anforderung an 10 Gbit/s Ethernet-Controller bzw. an eine 10 Gbit/s Netzwerkkarte für Kunden-Recheneinheiten. In den allermeisten Fällen ist eine 10 Gbit/s Verbindung nicht vorhanden, eine USB 3.0 oder höhere Verbindung dagegen schon.

Die vorgeschlagenen Vorrichtungen nach dem ersten oder zweiten allgemeinen Aspekt (oder Ausführungsformen davon) sind effizient, kostengünstig und ressourcenschonend.

### Kurzbeschreibung der Figuren

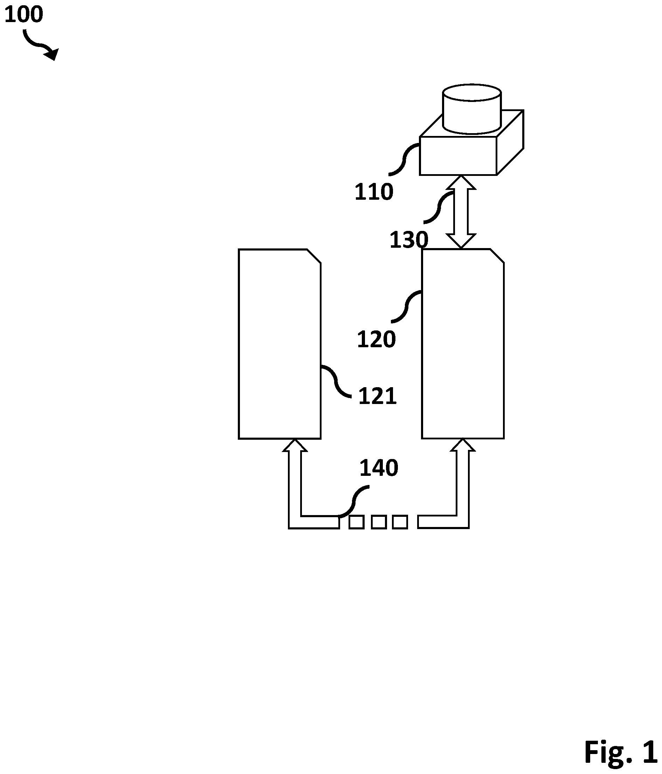

- **Fig. 1**: zeigt schematisch eine beispielhafte Vorrichtung zur Beobachtung und/oder Inspektion einer Materialbahn umfassend eine erste Kameraeinheit, eine erste Recheneinheit und eine zweite Recheneinheit.

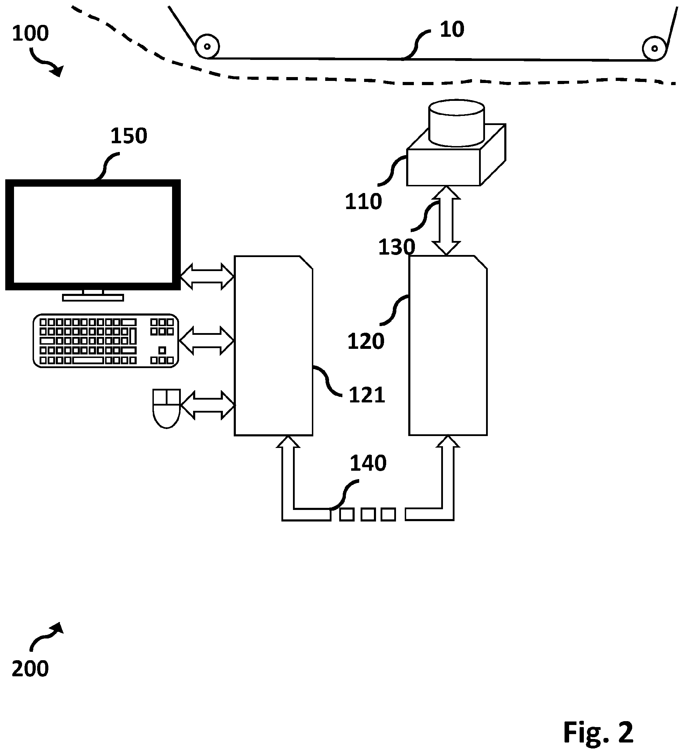

- **Fig. 2**: zeigt schematisch eine beispielhafte Vorrichtung zur Bearbeitung einer Materialbahn, insbesondere eine beispielhafte Vorrichtung zur Beobachtung und/oder Inspektion der Materialbahn umfassend eine erste Kameraeinheit, eine erste Recheneinheit, eine zweite Recheneinheit und eine Schnittstelle.

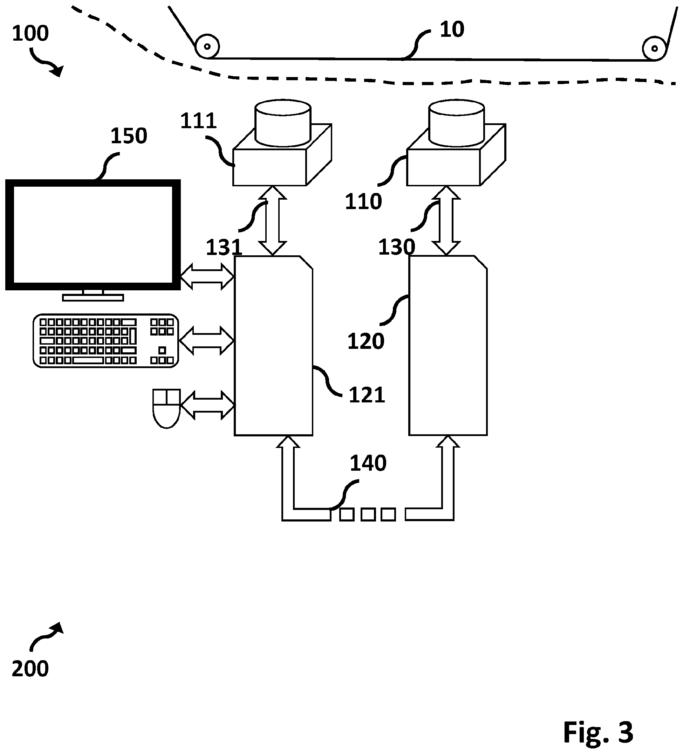

- **Fig. 3**: zeigt schematisch eine beispielhafte Vorrichtung zur Bearbeitung einer Materialbahn, insbesondere eine beispielhafte Vorrichtung zur Beobachtung und/oder Inspektion der Materialbahn umfassend eine erste Kameraeinheit, eine zweite Kameraeinheit, eine erste Recheneinheit, eine zweite Recheneinheit und eine Schnittstelle.

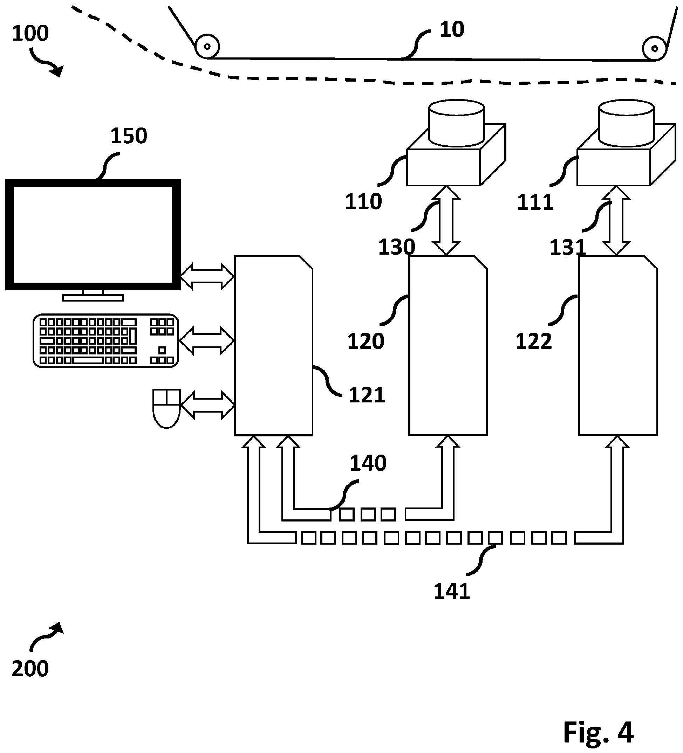

- **Fig. 4**: zeigt schematisch eine beispielhafte Vorrichtung zur Bearbeitung einer Materialbahn, insbesondere eine beispielhafte Vorrichtung zur Beobachtung und/oder Inspektion der Materialbahn umfassend eine erste Kameraeinheit, eine zweite Kameraeinheit, eine erste Recheneinheit, eine zweite Recheneinheit, eine dritte Recheneinheit und eine Schnittstelle.

### Ausführliche Beschreibung

Offenbart wird zunächst eine Vorrichtung 100 zur Beobachtung und/oder Inspektion einer Materialbahn 10, die beispielhaft und schematisch in **Fig. 1** illustriert ist. Die Vorrichtung 100 umfasst eine erste Kameraeinheit 110 zur Erfassung von ersten Bilddaten der Materialbahn 10. Eine Kameraeinheit kann einen oder mehrere Bildsensoren und optional eine oder mehrere Beleuchtungsapparaturen zur Aufnahme eines Bildes umfassen. Die erste Kameraeinheit 110 kann zum Beispiel eine oder mehrere Kameras, insbesondere Digitalkameras umfassen. Zum Beispiel kann die erste Kameraeinheit 110 eine Tele- und/oder Weitwinkelkamera umfassen. Die ersten Bilddaten können eine Abbildung der Materialbahn 10, insbesondere einer Seite der Materialbahn 10 umfassen. In anderen Worten, die ersten Bilddaten können aus einer Aufnahme einer Oberfläche der Materialbahn 10 generiert werden. Weiterhin können die ersten Bilddaten durch weitere Aufnahmen der Oberfläche der Materialbahn 10, z.B. in einer vorgegebenen Bildfrequenz, generiert werden. Die ersten Bilddaten können Bilder mit einer Bildfrequenz von mindestens 2 Hz, bevorzugt von mindestens 5 Hz, besonders bevorzugt von mindestens 15 Hz umfassen. Zum Beispiel kann die Bildfrequenz 15 oder 16 Hz sein. Ein Bild kann mindestens 8 Megapixel oder mindestens 8 RGB-Megapixel umfassen. Bevorzugt kann ein Bild mindestens 14 Megapixel oder mindestens 14 RGB-Megapixel umfassen. Besonders bevorzugt kann ein Bild mindestens 20 Megapixel oder mindestens 20 RGB-Megapixel umfassen.

Die Vorrichtung 100 umfasst weiterhin eine erste Recheneinheit 120, die mit der ersten Kameraeinheit 110 über eine erste Kameraverbindungsleitung 130 verbunden und dafür ausgelegt ist, die ersten Bilddaten zu empfangen. Die erste Recheneinheit 120 kann weiterhin dafür ausgelegt sein, die ersten Bilddaten zu bearbeiten. Die erste Kameraverbindungsleitung 130 kann zum Beispiel ebenfalls eine USB-Leitung sein. Eine Recheneinheit kann zum Beispiel einen Zentralprozessor, einen Arbeitsspeicher und Datenspeicher zur elektronischen Verarbeitung von Daten und USB-Schnittstellen umfassen. Die erste Recheneinheit 120 ist vorzugsweise eine eingebettete (d.h. z.B. aufgabenspezifische) Recheneinheit. Im Vergleich z.B. zu einer Desktop-Recheneinheit ist eine solche eingebettete Recheneinheit effizienter, ressourcenschonender und günstiger.

Die Vorrichtung 100 umfasst weiterhin eine zweite Recheneinheit 121, die dafür ausgelegt ist, die ersten Bilddaten von der ersten Recheneinheit 120 zu empfangen, wobei im Falle der Bearbeitung der ersten Bilddaten durch die erste Recheneinheit 120 die von der ersten Recheneinheit 120 bearbeiteten ersten Bilddaten empfangen werden können. Die zweite Recheneinheit 121 kann weiterhin dafür ausgelegt sein, die von der ersten Recheneinheit 120 (bearbeiteten) ersten Bilddaten (weiter) zu bearbeiten. Die zweite Recheneinheit 121 ist vorzugsweise ebenfalls eine eingebettete (d.h. z.B. aufgabenspezifische) Recheneinheit. Im Vergleich z.B. zu einer Desktop-Recheneinheit ist eine solche eingebettete Recheneinheit effizienter, ressourcenschonender und günstiger. Eingebettete erste und zweiten Recheneinheiten 120, 121 sind auch effizienter, ressourcenschonender und günstiger als eine einzige Desktop-Recheneinheit. Die zweite Recheneinheit 121 kann eine Kunden-Recheneinheit sein. Eine Kunden-Recheneinheit kann zum Beispiel dann zum Einsatz kommen, wenn der Kunde nur die Bilddaten zur Verfügung gestellt haben möchte und diese dann auf einer eigenen Kunden-Schnittstelle, über die eigene Kunden-Recheneinheit darstellen möchte. Auch die Bedienung z.B. der ersten Kameraeinheit 110 kann dann über die Kunden-Recheneinheit erfolgen.

Die erste Recheneinheit 120 und die zweite Recheneinheit 121 sind über eine erste USB-Leitung 140 (und optional über weitere Verbindungselemente) verbunden. Die ersten Bilddaten werden über die erste USB-Leitung 140 an die zweite Recheneinheit 121 übertragen, wobei im Falle der Bearbeitung der ersten Bilddaten durch die erste Recheneinheit 120 die von der ersten Recheneinheit bearbeiteten ersten Bilddaten über die erste USB-Leitung 140 übertragen werden können.

Die Vorrichtung 100 ist vornehmlich auf die Übertragung von Bilddaten gerichtet. Alternativ oder zusätzlich können (beliebige) Daten, d.h. nicht notwendigerweise ausschließlich erste Bilddaten über die erste USB-Leitung 140 übertragen werden. Nicht-Bilddaten können zum Beispiel Steuerungsinformationen und/oder Betriebsparameter der ersten Kameraeinheit 110 umfassen. Weiterhin kann die erste USB-Leitung 140 auch dazu genutzt werden, (beliebige) Daten von der zweiten Recheneinheit 121 an die erste Recheneinheit 120 zu übertragen. Diese Daten können zum Beispiel Steuerungsinformationen an die erste Kameraeinheit 110, insbesondere ausgehend von einer Schnittstelle 150, umfassen.

Die Vorrichtung 100 kann, wie beispielhaft und schematisch in **Fig. 2-4** dargestellt, eine Schnittstelle 150 umfassen, die mit der zweiten Recheneinheit 121 verbunden ist. Die Schnittstelle 150 kann dafür ausgelegt sein, die ersten Bilddaten von der zweiten Recheneinheit 121 zu empfangen. Die Schnittstelle 150 kann weiterhin dafür ausgelegt sein, die empfangenen ersten Bilddaten z.B. einem Prozessüberwacher auszugeben. Im Falle der Bearbeitung der ersten Bilddaten durch die erste und/oder zweite Recheneinheit können die von der ersten und/oder zweiten Recheneinheit bearbeiteten ersten Bilddaten von der Schnittstelle 150 empfangen und, optional, ausgegeben werden.

Die Schnittstelle 150 kann ein Ausgabegerät wie zum Beispiel einen Bildschirm umfassen. Alternativ oder zusätzlich kann die Schnittstelle 150 ein Eingabegerät wie zum Beispiel eine Tastatur und/oder eine Maus umfassen. Wie in **Fig. 2-4** dargestellt kann die Schnittstelle 150 sowohl einen Bildschirm als auch eine Tastatur und eine Maus umfassen. Alternativ können das Eingabegerät und das Ausgabegerät in einem Gerät integriert sein. Zum Beispiel können das Eingabegerät und das Ausgabegerät in einem Berührbildschirm (Touchscreen) integriert sein. Über das Eingabegerät können die ersten und/oder zweiten Bilddaten z.B. in unterschiedlichen Zoomstufen auf der Schnittstelle 150 ausgegeben werden.

Jede der in den Vorrichtungen 100 und 200 eingesetzten Recheneinheiten kann eine jeweilige Schnittstelle umfassen, die zur Wartung und/oder Inbetriebnahme der jeweiligen Recheneinheiten genutzt werden können.

Die Vorrichtung 100 kann, wie beispielhaft und schematisch in **Fig. 3-4** dargestellt, eine zweite Kameraeinheit 111 zur Erfassung von zweiten Bilddaten der Materialbahn 10 umfassen. Eine Kameraeinheit kann einen oder mehrere Bildsensoren und optional eine oder mehrere Beleuchtungsapparaturen zur Aufnahme eines Bildes umfassen. Die zweite Kameraeinheit 111 kann zum Beispiel eine oder mehrere Kameras, insbesondere Digitalkameras umfassen. Zum Beispiel kann die zweite Kameraeinheit 111 eine Tele- und/oder Weitwinkelkamera umfassen. Die zweiten Bilddaten können eine Abbildung der Materialbahn 10, insbesondere einer Seite (dieselbe oder die andere Seite) der Materialbahn 10 umfassen. In anderen Worten, die zweiten Bilddaten können aus einer Aufnahme einer Oberfläche der Materialbahn 10 generiert werden. Weiterhin können die zweiten Bilddaten durch weitere Aufnahmen der Oberfläche der Materialbahn 10, z.B. in einer vorgegebenen Bildfrequenz, generiert werden. Die zweiten Bilddaten können Bilder mit einer Bildfrequenz von mindestens 2 Hz, bevorzugt von mindestens 5 Hz, besonders bevorzugt von mindestens 15 Hz umfassen. Zum Beispiel kann die Bildfrequenz 15 oder 16 Hz sein. Ein Bild kann mindestens 8 Megapixel oder mindestens 8 RGB-Megapixel umfassen. Bevorzugt kann ein Bild mindestens 14 Megapixel oder mindestens 14 RGB-Megapixel umfassen. Besonders bevorzugt kann ein Bild mindestens 20 Megapixel oder mindestens 20 RGB-Megapixel umfassen.

Dank zumindest zweier Kameraeinheiten, die hinreichend hochauflösend sind, ist eine ausgeklügelte Erfassung von Bilddaten während der Bearbeitung der Materialbahn 10 möglich. Sie ermöglichen zum Beispiel Druckbilddarstellungen an laufenden Bahnen in höchster Detail- und/oder Farbtreue. Die Kameraeinheiten können dabei manuell oder motorisiert bewegt werden, um Positionen über der Materialbahn 10 mit höchster Präzision anzufahren, um die entsprechenden Bilder z.B. auf der Schnittstelle 150 darzustellen. Je nach Zoomstufe kann eine Tele- oder Weitwinkelkamera einer Kameraeinheit 110, 111 aktiviert werden. Während des Zoomens kann dann unmerklich zwischen der Telekamera und der Weitwinkelkamera umgeschaltet werden. Druckbilder können dadurch mit dem Vielfachen ihrer Auflösung dargestellt werden. Dadurch wird (nahezu) verzögerungsfreies Zoomen bis hin zur höchsten Auflösung ermöglicht.

Wie in **Fig. 3** schematisch dargestellt, kann die zweite Recheneinheit 121 mit der zweiten Kameraeinheit 111 über eine zweite Kameraverbindungsleitung 131 verbunden sein. Die zweite Recheneinheit 121 kann dafür ausgelegt sein, die zweiten Bilddaten zu empfangen. Die zweite Recheneinheit 121 kann weiterhin dafür ausgelegt sein, die zweiten Bilddaten zu bearbeiten. Die zweite Kameraverbindungsleitung 131 kann zum Beispiel ebenfalls eine USB-Leitung sein.

Alternativ kann die Vorrichtung 100, wie in **Fig. 4** schematisch dargestellt, eine dritte Recheneinheit 122 umfassen, die mit der zweiten Kameraeinheit 111 über eine zweite Kameraverbindungsleitung 131 verbunden und dafür ausgelegt ist, die zweiten Bilddaten zu empfangen. Die dritte Recheneinheit 122 kann weiterhin dafür ausgelegt sein, die zweiten Bilddaten zu bearbeiten. Die dritte Recheneinheit 122 ist vorzugsweise ebenfalls eine eingebettete (d.h. z.B. aufgabenspezifische) Recheneinheit. Die zweite Kameraverbindungsleitung 131 kann zum Beispiel ebenfalls eine USB-Leitung sein. Die zweite Recheneinheit 121 und die dritte Recheneinheit 122 können über eine zweite USB-Leitung 141 verbunden sein. Die zweiten Bilddaten können dann über die zweite USB-Leitung 141 an die zweite Recheneinheit 121 übertragen werden. Die hinreichend schnelle Datenübertragung über die zweite USB-Leitung 141 kann (muss aber nicht) wie die Datenübertragung über die erste USB-Leitung 140 realisiert werden (z.B. mit maximaler Burst Einstellung des virtuellen Netzwerkgeräts gleich 15 und Änderung der MTU der virtuellen Netzwerkinterfaces auf 15300, siehe unten). Außerdem können wie bei der ersten USB-Leitung 140 auch Nichtbilddaten über die zweite USB-Leitung 141 bei Bedarf in beiden Richtungen übertragen werden.

Die Schnittstelle 150 kann dafür ausgelegt sein, (auch) die zweiten Bilddaten von der zweiten Recheneinheit zu empfangen. Die Schnittstelle 150 kann weiterhin (auch) dafür ausgelegt sein, die empfangenen zweiten Bilddaten z.B. einem Prozessüberwacher auszugeben. Im Falle der Bearbeitung der zweiten Bilddaten durch die zweite bzw. dritte Recheneinheit 121 können die von der zweiten bzw. dritten Recheneinheit bearbeiteten zweiten Bilddaten von der Schnittstelle 150 empfangen und, optional, ausgegeben werden.

Die Bildfrequenz der ersten Bilddaten und der zweiten Bilddaten kann, muss aber nicht gleich sein. Die ersten und zweiten Bilddaten können zum Beispiel (nahezu) synchron auf der Schnittstelle 150 ausgegeben werden. Die ersten Bilddaten können zum Beispiel von einer Seite der Materialbahn 10 aufgezeichnet werden und die zweiten Bilddaten von der anderen Seite der Materialbahn 10 aufgezeichnet werden. Alternativ können in einem anderen Beispiel die ersten und zweiten Bilddaten von derselben Seite der Materialbahn 10 aufgezeichnet werden. In jedem dieser Fälle können die ersten und zweiten Bilddaten versetzt oder auf der gleichen Position (z.B. in Längsrichtung der Materialbahn) aufgezeichnet werden.

Dank der zweiten Kameraeinheit 111, die entweder über die zweite Kameraverbindungsleitung 131 mit der zweiten Recheneinheit 121 oder über die zweite Kameraverbindungsleitung 131 und die zweite USB-Leitung 141 mit der zweiten Recheneinheit 121 verbunden ist, können die ersten und zweiten Bilddaten an der zweiten Recheneinheit 121, d.h. an einer einzigen Recheneinheit und insbesondere über die mit der zweiten Recheneinheit 121 verbundene Schnittstelle 150 in (nahezu) Echtzeit überwacht werden. Dadurch kann die Beobachtung und/oder Inspektion der Materialbahn 10 verbessert werden. Ein weiterer Vorteil ist, dass in allen Ausführungsformen der Vorrichtung 100 die zweite Kameraeinheit 111 und gegebenenfalls die dritte Recheneinheit 122 nachrüstbar sind.

Über das Eingabegerät der Schnittstelle 150 können die erste Kameraeinheit 110 und die zweite Kameraeinheit 111 und gegebenenfalls weitere Kameraeinheiten in einem Betriebsmodus unabhängig voneinander gesteuert werden. In einem anderen Betriebsmodus können die erste Kameraeinheit 110 und die zweite Kameraeinheit 111 und gegebenenfalls weitere Kameraeinheiten über das Eingabegerät der Schnittstelle 150 gekoppelt gesteuert werden, z.B. in einem Lead/Follow-Modus. Zum Beispiel können die erste Kameraeinheit 110 für die Registerkontrolle und/oder Farbüberwachung und die zweite Kameraeinheit 111 für unabhängiges Arbeiten eingesetzt werden. Alternativ oder zusätzlich (z.B. zu einem anderen Zeitpunkt) können die erste Kameraeinheit 110 und die zweite Kameraeinheit 111 zum Überwachen aufeinanderfolgender Prozesse eingesetzt werden. Alternativ oder zusätzlich (z.B. zu einem anderen Zeitpunkt) können die erste Kameraeinheit 110 und die zweite Kameraeinheit 111 zur Überwachung der linken und rechten Bahnkante der Materialbahn 10 (im Hinblick auf Parallelität) eingesetzt werden. Alternativ oder zusätzlich (z.B. zu einem anderen Zeitpunkt) können die erste Kameraeinheit 110 und die zweite Kameraeinheit 111 für die Kontrolle von Vorder- und Rückseitenregister (z.B. via Rasterlinien) eingesetzt werden. Alternativ oder zusätzlich (z.B. zu einem anderen Zeitpunkt) können die erste Kameraeinheit 110 und die zweite Kameraeinheit 111 für eine Kombination von Weißlicht und UV-Licht eingesetzt werden.

Die erste Recheneinheit 120 kann eine erste USB-Schnittstelle und die zweite Recheneinheit 121 eine zweite USB-Schnittstelle umfassen, wobei die erste USB-Schnittstelle und die zweite USB-Schnittstelle über die erste USB-Leitung 140 verbunden sein können. In diesem Fall können die erste Recheneinheit 120 und die zweite Recheneinheit 121 wie z.B. **in** **Fig. 1-4** direkt über die erste USB-Leitung 140 verbunden sein. In anderen Worten, die Datenübertragung kann über eine Punkt-zu-Punkt-Verbindung zwischen der ersten und der zweiten Recheneinheit realisiert werden.

Die dritte Recheneinheit 122, falls vorhanden, kann eine dritte USB-Schnittstelle umfassen, wobei die dritte USB-Schnittstelle und die zweite USB-Schnittstelle (oder die dritte USB-Schnittstelle und eine vierte USB-Schnittstelle der zweiten Recheneinheit 121) über die zweite USB-Leitung 141 verbunden sein können. In diesem Fall können die zweite Recheneinheit 121 und die dritte Recheneinheit 122 wie z.B. **in** **Fig. 4** direkt über die zweite USB-Leitung 141 verbunden sein. In anderen Worten, die Datenübertragung kann über eine Punkt-zu-Punkt-Verbindung zwischen der zweiten und der dritten Recheneinheit realisiert werden.

Eine USB-Schnittstelle kann eine physikalische Anschlussmöglichkeit (z.B. eine Buchse) für eine USB-Leitung 140, 141 sein. Eine USB-Leitung 140, 141 kann ein Kabel zur Verbindung zweier USB-Schnittstellen sein.

Jeweils eine Recheneinheit 120, 121 kann im Host- bzw. Device-Modus betrieben werden. Zum Beispiel kann die erste Recheneinheit 120 im Device-Modus und die zweite Recheneinheit 121 im Host-Modus betrieben werden. Für eine solche Verbindung müssen die Recheneinheiten zum Beispiel mit jeweils einem USB-C Port ausgestattet sein. Der USB-C Port muss eine Umschaltung zwischen Host/Device-Modus mittels der USB OTG Spezifikation unterstützen. Die spezielle Beschaltung ermöglicht es den Recheneinheiten 120, 121 zu erkennen, ob die Spannung Vdd auf der ersten USB-Leitung 140 anliegt. Der Host- bzw. Device-Modus kann dynamisch umgeschaltet werden. In Bezug auf die zweite USB-Leitung 141, falls vorhanden, kann zum Beispiel die dritte Recheneinheit 122 im Device-Modus und die zweite Recheneinheit 121 im Host-Modus betrieben werden.

Die erste USB-Schnittstelle und die zweite USB-Schnittstelle können in ein Netzwerk eingebunden sein, wobei das Netzwerk bevorzugt ein Ethernet sein kann.

Dazu kann die erste USB-Schnittstelle über ein virtuelles Netzwerkgerät in das Netzwerk eingebunden sein. Auch die dritte USB-Schnittstelle kann über ein (weiteres) virtuelles Netzwerkgerät in das oder ein weiteres Netzwerk eingebunden sein. Ein Netzwerkgerät kann eine in einer Recheneinheit nutzbare Peripherie zum Aufbau einer Netzwerkverbindung sein. Das Netzwerkgerät kann virtuell in dem Sinne sein, dass das Netzwerkgerät nicht physisch, sondern nur im Arbeitsspeicher einer oder mehrerer Recheneinheiten existiert, d.h. simuliert wird. Dadurch kann eine USB-Schnittstelle in einem Netzwerk, insbesondere in einem Ethernet verwendet werden. Das virtuelle Netzwerkgerät kann auf dem Linux Treiber g_ether des Linux-USB Gadget API Framework basieren. In anderen Worten, unter Verwendung des Linux Treiber g_ ether kann das virtuelle Netzwerkgerät generiert werden. Die Verwendung des Linux Treiber g_ether erweist sich als vorteilhaft, da die maximale Burst Einstellung für das virtuelle Netzwerkgerät gewählt werden kann. Die maximale Burst Einstellung des virtuellen Netzwerkgeräts kann größer als 0 sein. Bevorzugt kann die maximale Burst Einstellung des virtuellen Netzwerkgeräts größer als oder gleich 10 sein. Besonders bevorzugt kann die maximale Burst Einstellung des virtuellen Netzwerkgeräts gleich 15 sein. Je größer die maximale Burst Einstellung des virtuellen Netzwerkgeräts, umso mehr Daten können gleichzeitig verschickt werden. Dadurch kann vorteilhafterweise die Übertragungsrate gesteigert werden. Eine maximale Burst Einstellung von 15 ermöglicht somit eine möglichst schnelle Übertragungsrate.

Das Netzwerk kann von der ersten Recheneinheit 120 über ein erstes virtuelles Netzwerkinterface konfiguriert werden. Ein Netzwerkinterface kann eine zu einer Hardware gehörige Softwareschnittstelle zur Konfiguration einer Netzwerkverbindung umfassen. Das Netzwerkinterface kann virtuell in dem Sinne sein, dass die zu der Softwareschnittstelle gehörige Hardware (hier das Netzwerkgerät) nicht physisch, sondern nur virtuell existiert.

Die Maximum Transmission Unit (MTU) des ersten virtuellen Netzwerkinterface kann größer als 1500 konfiguriert (d.h. gewählt) werden. Bevorzugt kann die Maximum Transmission Unit (MTU) des ersten virtuellen Netzwerkinterface größer als 7000 konfiguriert werden. Besonders bevorzugt kann die Maximum Transmission Unit (MTU) des ersten virtuellen Netzwerkinterface gleich 15300 konfiguriert sein.

Das Netzwerk kann von der zweiten Recheneinheit 121 über ein zweites virtuelles Netzwerkinterface konfiguriert werden. Das virtuelle Netzwerkgerät kann z.B. bei Ausführung einer Linux Distribution auf der zweiten Recheneinheit 121 durch den Linux Treiber cdc_ether des Linux CDC Ethernet Support als zweites virtuelles Netzwerkinterface eingebunden werden. Alternativ kann das virtuelle Netzwerkgerät z.B. bei Ausführung eines Windows Betriebssystems auf der zweiten Recheneinheit 121 durch den Windows RNDIS (Gadget) Treiber als zweites virtuelles Netzwerkinterface eingebunden werden.

Die Maximum Transmission Unit (MTU) des zweiten virtuellen Netzwerkinterface kann größer als 1500 konfiguriert (d.h. gewählt) werden. Bevorzugt kann die Maximum Transmission Unit (MTU) des zweiten virtuellen Netzwerkinterface größer als 7000 konfiguriert werden. Besonders bevorzugt kann die Maximum Transmission Unit (MTU) des zweiten virtuellen Netzwerkinterface gleich 15300 konfiguriert sein.

Je größer die Maximum Transmission Units (MTU) des ersten und zweiten virtuellen Netzwerkinterface gewählt wird, umso mehr Daten können innerhalb einer Übertragungseinheit (Unit) übertragen werden. Auch dadurch kann vorteilhafterweise die Übertragungsrate gesteigert werden. Es kann vorteilhaft sein, die Maximum Transmission Units (MTU) des ersten und zweiten virtuellen Netzwerkinterface identisch zu konfigurieren, damit Übertragungseinheiten nicht aufgeteilt oder verschmolzen werden müssen.

In einer bevorzugten Ausführungsform der Vorrichtung 100 kann die maximale Burst Einstellung des virtuellen Netzwerkgeräts gleich 15 und die Maximum Transmission Units (MTU) des ersten und zweiten virtuellen Netzwerkinterface gleich 15300 sein. Sobald die Verbindung zwischen zwei Recheneinheiten (z.B. zwischen der ersten Recheneinheit 120 und der zweiten Recheneinheit 121) hergestellt ist, kann auf dem Host zum Beispiel der Windows RNDIS (Gadget) Treiber aktiviert werden. Dieser Treiber ermöglicht es eine virtuelle Netzwerkverbindung herzustellen. Mit Hilfe von Modifikationen der maximalen Burst Einstellung im Treiber selbst von 0 auf z.B. 15 und der Änderung der MTU der virtuellen Netzwerkinterfaces auf 15300 kann zum Beispiel die Übertragungsrate auf ca. 2.6 Gbit/s im Vergleich zu ca. 25 Mbit/s ohne Modifikation auf USB 2 erhöht werden.

In der Tat wurde die Erfindung mit Hilfe von zwei eingebetteten Recheneinheiten getestet. Eine eingebettete Recheneinheit wurde aufgrund des vorhandenen USB 3 USB-C OTG Ports als Device betrieben. Auf diesem wurden die oben beschriebenen Modifikationen (maximale Burst Einstellung des virtuellen Netzwerkgeräts gleich 15, Änderung der MTU der virtuellen Netzwerkinterfaces auf 15300) durchgeführt. Die gemessene Übertragungsrate betrug ca. 3,2 Gbit/s. Mit zwei Programmen wurde zudem eine TCP-Verbindung aufgebaut, welche simulierte Bilddaten überträgt. In einem solchen, dem realen Anwendungsfall nachempfundenen Szenario, konnte eine Übertragungsrate von ca. 2,6 Gbit/s erreicht werden, was etwa 325 MB/s entspricht. Damit lassen sich zum Beispiel bereits erste Bilddaten mit 20 RGB-Megapixel (60 MB pro Bild) und einer Bildfrequenz von 5 Hz von der ersten Recheneinheit 120 an die zweite Recheneinheit 121 übertragen (erforderliche Übertragungsrate von 300 MB/s). Alternativ ließen sich damit zum Beispiel erste Bilddaten mit 6,6 RGB-Megapixel (20 MB pro Bild) und einer Bildfrequenz von 15 Hz von der ersten Recheneinheit 120 an die zweite Recheneinheit 121 übertragen (erforderliche Übertragungsrate von 300 MB/s).

Die erste USB-Leitung 140, die erste Kameraverbindungsleitung 130 und/oder die zweite Kameraverbindungsleitung 131 können (insgesamt) eine Länge von mindestens 10 m, von mindestens 50 m, oder von mindestens 100 m aufweisen. Alternativ oder zusätzlich können die zweite USB-Leitung 141, die erste Kameraverbindungsleitung 130 und/oder die zweite Kameraverbindungsleitung 131 (insgesamt) eine Länge von mindestens 10 m, von mindestens 50 m, oder von mindestens 100 m aufweisen.

Die erste USB-Leitung 140 kann zum Beispiel eine Länge von mindestens 2 cm, von mindestens 10 m, von mindestens 50 m, oder von mindestens 100 m aufweisen. Alternativ oder zusätzlich kann die erste Kameraverbindungsleitung 130 zum Beispiel eine Länge von mindestens 2 cm, von mindestens 10 m, von mindestens 50 m, oder von mindestens 100 m aufweisen. Alternativ oder zusätzlich kann die zweite Kameraverbindungsleitung 131, falls vorhanden, zum Beispiel eine Länge von mindestens 2 cm, von mindestens 10 m, von mindestens 50 m, oder von mindestens 100 m aufweisen. Zum Beispiel können die erste Recheneinheit 120 und die zweite Recheneinheit 121 nebeneinanderstehen, so dass die erste USB-Leitung 140 nur eine kurze Länge aufweisen muss. Die kürzeste Länge der ersten USB-Leitung 140 ergibt sich aus der Summe zweier USB-Stecker und beträgt z.B. 2 cm. Dank der möglichen unterschiedlichen Längen können je nach Kundenwunsch und/oder Anforderungen die erste Recheneinheit 120, die zweite Recheneinheit 121, die erste Kameraeinheit 110 und, gegebenenfalls die zweite Kameraeinheit 111 an unterschiedlichen Positionen der Materialbahn 10 angeordnet sein.

Auch die zweite USB-Leitung 141, falls vorhanden, kann zum Beispiel eine Länge von mindestens 2 cm, von mindestens 10 m, von mindestens 50 m, oder von mindestens 100 m aufweisen. Alternativ oder zusätzlich kann die zweite Kameraverbindungsleitung 131, falls vorhanden, zum Beispiel eine Länge von mindestens 2 cm, von mindestens 10 m, von mindestens 50 m, oder von mindestens 100 m aufweisen. Zum Beispiel können die zweite Recheneinheit 121 und die dritte Recheneinheit 122 nebeneinanderstehen, so dass die zweite USB-Leitung 141 nur eine kurze Länge aufweist. Die kürzeste Länge der zweiten USB-Leitung 141 ergibt sich ebenfalls aus der Summe zweier USB-Stecker und beträgt z.B. 2 cm. Dank der möglichen unterschiedlichen Längen können je nach Kundenwunsch und/oder Anforderungen, falls vorhanden die zweite Recheneinheit 121, die dritte Recheneinheit 122 und die zweite Kameraeinheit 111 an unterschiedlichen Positionen der Materialbahn 10 angeordnet sein.

Durch die unterschiedlichen Längen ist eine maximale Flexibilität bei der Beobachtung und/oder Inspektion der Materialbahn 10 gegeben.

Die erste USB-Leitung 140, mithin die Übertragungstechnik kann nach dem Standard USB 3.0 oder höher spezifiziert sein. Zum Beispiel kann die erste USB-Leitung 140 nach einem der Standards USB 3.0, USB 3.1 oder USB 3.2 spezifiziert sein. Falls vorhanden, kann die zweite USB-Leitung 141, mithin die Übertragungstechnik ebenfalls nach dem Standard USB 3.0 oder höher spezifiziert sein. Zum Beispiel kann die zweite USB-Leitung 141 nach einem der Standards USB 3.0, USB 3.1 oder USB 3.2 spezifiziert sein. Je höher die Spezifizierung ist, umso höher sind die Übertragungsraten.

Die erste USB-Leitung 140 kann einen Kupferleiter umfassen. Dies ist besonders in den Fällen, in denen die erste Recheneinheit 120 und die zweite 121 Recheneinheit über eine kurze erste USB-Leitung 140 verbunden ist, vorteilhaft, weil hier ein teurerer Lichtwellenleiter ohne Einbußen in der Übertragungsrate vermieden werden kann. Alternativ kann die erste USB-Leitung 140 einen Lichtwellenleiter, insbesondere einen Glasfaserinnenleiter umfassen. Ein Lichtwellenleiter kann trotz der höheren Kosten gegenüber einem Kupferleiter vorteilhaft sein, wenn die erste USB-Leitung 140 länger ist und die gewünschte Übertragungsrate nur durch den Lichtwellenleiter erreicht werden kann.

Die zweite USB-Leitung 141 kann einen Kupferleiter umfassen. Dies ist besonders in den Fällen, in denen die zweite Recheneinheit 121 und die dritte 122 Recheneinheit über eine kurze zweite USB-Leitung 141 verbunden ist, vorteilhaft, weil hier ein teurerer Lichtwellenleiter ohne Einbußen in der Übertragungsrate vermieden werden kann. Alternativ kann die zweite USB-Leitung 141 einen Lichtwellenleiter, insbesondere einen Glasfaserinnenleiter umfassen. Ein Lichtwellenleiter kann trotz der höheren Kosten gegenüber einem Kupferleiter vorteilhaft sein, wenn die zweite USB-Leitung 141 länger ist und die gewünschte Übertragungsrate nur durch den Lichtwellenleiter erreicht werden kann.

Sowohl Lichtwellenleiter als auch Kupferleiter können nach USB 3.0 oder höher spezifiziert sein.

Die zweite oder vierte USB-Schnittstelle und die dritte USB-Schnittstelle können in ein weiteres Netzwerk, bevorzugt in ein weiteres Ethernet eingebunden sein. Die dritte USB-Schnittstelle kann über ein drittes virtuelles Netzwerkgerät in das weitere Netzwerk eingebunden sein. Das weitere Netzwerk kann von der dritten Recheneinheit 122 über ein drittes virtuelles Netzwerkinterface konfiguriert werden. Die zweite oder vierte USB-Schnittstelle kann über ein viertes virtuelles Netzwerkgerät in das weitere Netzwerk eingebunden sein. Das weitere Netzwerk kann von der zweiten Recheneinheit 121 über ein viertes virtuelles Netzwerkinterface konfiguriert werden.

Offenbart wird weiterhin eine Vorrichtung 200 zur Bearbeitung einer Materialbahn 10, schematisch illustriert in **Fig. 2-4****.** Die Vorrichtung 200 umfasst die Materialbahn 10 und jede hier offenbarte Ausführungsform der Vorrichtung 100 zur Beobachtung und/oder Inspektion der Materialbahn 10. Die Vorrichtung 200 umfasst üblicherweise weitere Elemente wie z.B. ein oder mehrere Bahnlaufregelsysteme umfassend Antrieb, Steuerung und Rollen zur Bewegung der Materialbahn 10 in Längsrichtung. Die Vorrichtung 200 umfasst zum Beispiel auch mindestens eine Bearbeitungsvorrichtung - z.B. mindestens eine Druckwalze, mindestens einen Druckkopf und/oder ein Bahnschneidesystem - zur Bearbeitung der Materialbahn 10.

Alternativ oder zusätzlich kann die Erfindung auch entsprechend der folgenden Inkarnationen definiert werden:
1. Vorrichtung (100) zur Beobachtung und/oder Inspektion einer Materialbahn (10), umfassend:
   eine erste Kameraeinheit (110) zur Erfassung von ersten Bilddaten der Materialbahn (10);
   eine erste Recheneinheit (120), die mit der ersten Kameraeinheit über eine erste Kameraverbindungsleitung (130) verbunden ist, dafür ausgelegt, die ersten Bilddaten zu empfangen und, optional, zu bearbeiten;
   eine zweite Recheneinheit (121), dafür ausgelegt, die ersten Bilddaten von der ersten Recheneinheit (120) zu empfangen, und, optional, zu bearbeiten;
   wobei die erste Recheneinheit (120) und die zweite Recheneinheit (121) über eine erste USB-Leitung (140) verbunden sind;
   wobei die ersten Bilddaten über die erste USB-Leitung (140) an die zweite Recheneinheit (121) übertragen werden.
2. Vorrichtung (100) nach Inkarnation 1, umfassend:
   eine Schnittstelle (150) verbunden mit der zweiten Recheneinheit (121) und dafür ausgelegt,
   die ersten Bilddaten von der zweiten Recheneinheit (121) zu empfangen und auszugeben.
3. Vorrichtung (100) nach einer der vorhergehenden Inkarnationen, umfassend:
   eine zweite Kameraeinheit (111) zur Erfassung von zweiten Bilddaten der Materialbahn (10).
4. Vorrichtung (100) nach Inkarnation 3, wobei die zweite Recheneinheit (121) mit der zweiten Kameraeinheit (111) über eine zweite Kameraverbindungsleitung (131) verbunden ist und dafür ausgelegt ist, die zweiten Bilddaten zu empfangen und, optional, zu bearbeiten.
5. Vorrichtung (100) nach Inkarnation 3, umfassend:
   eine dritte Recheneinheit (122), die mit der zweiten Kameraeinheit (111) über eine zweite Kameraverbindungsleitung (131) verbunden ist, dafür ausgelegt, die zweiten Bilddaten zu empfangen und, optional, zu bearbeiten.
6. Vorrichtung (100) nach Inkarnation 5, wobei die zweite Recheneinheit (121) und die dritte Recheneinheit (122) über eine zweite USB-Leitung (141) verbunden sind;
   wobei die zweiten Bilddaten über die zweite USB-Leitung (141) an die zweite Recheneinheit (121) übertragen werden.
7. Vorrichtung (100) nach einer der vorhergehenden Inkarnationen, wenn abhängig von den Inkarnationen 2 und 3, wobei die Schnittstelle (150) dafür ausgelegt ist, die zweiten Bilddaten von der zweiten Recheneinheit (121) zu empfangen und auszugeben.
8. Vorrichtung (100) nach einer der vorhergehenden Inkarnationen, wobei die erste Recheneinheit (120) eine erste USB-Schnittstelle und die zweite Recheneinheit (121) eine zweite USB-Schnittstelle umfasst, wobei die erste USB-Schnittstelle und die zweite USB-Schnittstelle über die erste USB-Leitung (140) verbunden sind.
9. Vorrichtung (100) nach Inkarnation 8, wenn abhängig von Inkarnation 6, wobei die dritte Recheneinheit (122) eine dritte USB-Schnittstelle umfasst,
   wobei die dritte USB-Schnittstelle und die zweite USB-Schnittstelle über die zweite USB-Leitung (141) verbunden sind; oder
   wobei die zweite Recheneinheit (121) eine vierte USB-Schnittstelle umfasst und die dritte USB-Schnittstelle und die vierte USB-Schnittstelle über die zweite USB-Leitung (141) verbunden sind.
10. Vorrichtung (100) nach Inkarnation 8 oder 9, wobei die erste USB-Schnittstelle und die zweite USB-Schnittstelle in ein Netzwerk, bevorzugt in ein Ethernet eingebunden sind.
11. Vorrichtung (100) nach Inkarnation 10, wobei die erste USB-Schnittstelle über ein virtuelles Netzwerkgerät in das Netzwerk eingebunden ist.
12. Vorrichtung (100) nach Inkarnation 11, wobei das virtuelle Netzwerkgerät auf dem Linux Treiber g_ether des Linux-USB Gadget API Framework basiert.
13. Vorrichtung (100) nach Inkarnation 11 oder 12, wobei die maximale Burst Einstellung des virtuellen Netzwerkgeräts größer als 0, bevorzugt größer als oder gleich 10, besonders bevorzugt gleich 15 ist.
14. Vorrichtung (100) nach einer der Inkarnationen 10 bis 13, wobei das Netzwerk von der ersten Recheneinheit (120) über ein erstes virtuelles Netzwerkinterface konfiguriert werden kann.
15. Vorrichtung (100) nach Inkarnation 14, wobei die Maximum Transmission Unit (MTU) des ersten virtuellen Netzwerkinterface größer als 1500, bevorzugt größer als 7000, besonders bevorzugt 15300 konfiguriert ist.
16. Vorrichtung (100) nach einer der Inkarnationen 8 bis 15, wobei das Netzwerk von der zweiten Recheneinheit (121) über ein zweites virtuelles Netzwerkinterface konfiguriert werden kann.
17. Vorrichtung (100) nach Inkarnation 16, wenn abhängig von Inkarnation 11, wobei das virtuelle Netzwerkgerät durch den Linux Treiber cdc_ether des Linux CDC Ethernet Support als zweites virtuelles Netzwerkinterface eingebunden wird.
18. Vorrichtung (100) nach Inkarnation 16, wenn abhängig von Inkarnation 11, wobei das virtuelle Netzwerkgerät durch den Windows RNDIS Treiber als zweites virtuelles Netzwerkinterface eingebunden wird.
19. Vorrichtung (100) nach einer der Inkarnationen 16 bis 18, wobei die Maximum Transmission Unit (MTU) des zweiten virtuellen Netzwerkinterface größer als 1500, bevorzugt größer als 7000, besonders bevorzugt 15300 konfiguriert ist.
20. Vorrichtung (100) nach einer der vorhergehenden Inkarnationen, wobei die erste USB-Leitung (140) oder, wenn abhängig von Inkarnation 6, die zweite USB-Leitung (141), die erste Kameraverbindungsleitung (130) und/oder, wenn abhängig von Inkarnation 4 oder 5, die zweite Kameraverbindungsleitung (131) eine Länge von mindestens 10 m, von mindestens 50 m, oder von mindestens 100 m aufweist.
21. Vorrichtung (100) nach einer der vorhergehenden Inkarnationen, wobei die erste USB-Leitung (140) nach dem Standard USB 3.0 oder höher spezifiziert ist, insbesondere wobei die erste USB-Leitung (140) nach einem der Standards USB 3.0, USB 3.1 oderUSB 3.2 spezifiziert ist.
22. Vorrichtung (100) nach einer der vorhergehenden Inkarnationen, wobei die erste USB-Leitung (140) einen Kupferleiter umfasst.
23. Vorrichtung (100) nach einer der vorhergehenden Inkarnationen, wobei die erste USB-Leitung (140) einen Lichtwellenleiter, insbesondere einen Glasfaserinnenleiter umfasst.
24. Vorrichtung (100) nach einer der vorhergehenden Inkarnationen, wenn abhängig von Inkarnation 6, wobei die zweite USB-Leitung (141) einen Kupferleiter umfasst.
25. Vorrichtung (100) nach einer der vorhergehenden Inkarnationen, wenn abhängig von Inkarnation 6, wobei die zweite USB-Leitung (141) einen Lichtwellenleiter, insbesondere einen Glasfaserinnenleiter umfasst.
26. Vorrichtung (100) nach einer der vorhergehenden Inkarnationen, wobei die ersten Bilddaten und/oder, wenn abhängig von Inkarnation 3, die zweiten Bilddaten Bilder mit einer Bildfrequenz von mindestens 2 Hz, bevorzugt von mindestens 5 Hz, besonders bevorzugt von mindestens 15 Hz umfassen.
27. Vorrichtung (100) nach Inkarnation 26, wobei ein Bild mindestens 8 Megapixel oder mindestens 8 RGB-Megapixel, bevorzugt mindestens 14 Megapixel oder mindestens 14 RGB-Megapixel, besonders bevorzugt mindestens 20 Megapixel oder mindestens 20 RGB-Megapixel umfasst.
28. Vorrichtung (100) nach einer der vorhergehenden Inkarnationen, wenn abhängig von Inkarnation 7, wobei die ersten und zweiten Bilddaten synchron auf der Schnittstelle (150) ausgegeben werden.
29. Vorrichtung (100) nach einer der vorhergehenden Inkarnationen, wenn abhängig von Inkarnation 3, wobei die ersten Bilddaten von einer Seite der Materialbahn (10) aufgezeichnet werden und die zweiten Bilddaten von der anderen Seite der Materialbahn (10) aufgezeichnet werden.
30. Vorrichtung (100) nach einer der vorhergehenden Inkarnationen, wenn abhängig von Inkarnation 3, wobei die ersten und zweiten Bilddaten von derselben Seite der Materialbahn (10) aufgezeichnet werden.
31. Vorrichtung (100) nach einer der vorhergehenden Inkarnationen, wenn abhängig von Inkarnation 2, wobei die Schnittstelle (150) ein Eingabe- und/oder ein Ausgabegerät, insbesondere einen Bildschirm umfasst.
32. Vorrichtung (100) nach einer der vorhergehenden Inkarnationen, wenn abhängig von Inkarnationen 8 und 9, wobei die zweite oder vierte USB-Schnittstelle und die dritte USB-Schnittstelle in ein weiteres Netzwerk, bevorzugt in ein weiteres Ethernet eingebunden sind.
33. Vorrichtung (100) nach Inkarnation 32, wobei die dritte USB-Schnittstelle über ein drittes virtuelles Netzwerkgerät in das weitere Netzwerk eingebunden ist.
34. Vorrichtung (100) nach Inkarnation 32 oder 33, wobei das weitere Netzwerk von der dritten Recheneinheit (122) über ein drittes virtuelles Netzwerkinterface konfiguriert werden kann.
35. Vorrichtung (100) nach einer der Inkarnationen 32 bis 34, wobei die zweite oder vierte USB-Schnittstelle über ein viertes virtuelles Netzwerkgerät in das weitere Netzwerk eingebunden ist.
36. Vorrichtung (100) nach einer der Inkarnationen 32 bis 35, wobei das weitere Netzwerk von der zweiten Recheneinheit (121) über ein viertes virtuelles Netzwerkinterface konfiguriert werden kann.
37. Vorrichtung (100) nach einer der vorhergehenden Inkarnationen, wenn abhängig von Inkarnation 6, wobei die zweite USB-Leitung (141) nach dem Standard USB 3.0 oder höher spezifiziert ist, insbesondere wobei die zweite USB-Leitung (141) nach einem der Standards USB 3.0, USB 3.1 oder USB 3.2 spezifiziert ist.
38. Vorrichtung (200) zur Bearbeitung einer Materialbahn (10), umfassend:
   die Materialbahn (10);
   die Vorrichtung (100) zur Beobachtung und/oder Inspektion der Materialbahn (10) nach einer der vorhergehenden Inkarnationen.

## Patentansprüche

1. Vorrichtung (100) zur Beobachtung und/oder Inspektion einer Materialbahn (10), umfassend:
eine erste Kameraeinheit (110) zur Erfassung von ersten Bilddaten der Materialbahn (10);
eine erste Recheneinheit (120), die mit der ersten Kameraeinheit über eine erste Kameraverbindungsleitung (130) verbunden ist, dafür ausgelegt, die ersten Bilddaten zu empfangen und, optional, zu bearbeiten;
eine zweite Recheneinheit (121), dafür ausgelegt, die ersten Bilddaten von der ersten Recheneinheit (120) zu empfangen, und, optional, zu bearbeiten;
wobei die erste Recheneinheit (120) und die zweite Recheneinheit (121) über eine erste USB-Leitung (140) verbunden sind;
wobei die ersten Bilddaten über die erste USB-Leitung (140) an die zweite Recheneinheit (121) übertragen werden;
wobei die erste Recheneinheit (120) eine erste USB-Schnittstelle und die zweite Recheneinheit (121) eine zweite USB-Schnittstelle umfasst, wobei die erste USB-Schnittstelle und die zweite USB-Schnittstelle über die erste USB-Leitung (140) verbunden sind;
wobei die erste USB-Schnittstelle und die zweite USB-Schnittstelle in ein Netzwerk eingebunden sind.

2. Vorrichtung (100) nach Anspruch 1, wobei das Netzwerk ein Ethernet ist.

3. Vorrichtung (100) nach Anspruch 1 oder 2, umfassend:
eine zweite Kameraeinheit (111) zur Erfassung von zweiten Bilddaten der Materialbahn (10).

4. Vorrichtung (100) nach einem der vorhergehenden Ansprüche, wobei die ersten Bilddaten und/oder, wenn abhängig von Anspruch 3, die zweiten Bilddaten Bilder mit einer Bildfrequenz von mindestens 2 Hz, bevorzugt von mindestens 5 Hz, besonders bevorzugt von mindestens 15 Hz umfassen.

5. Vorrichtung (100) nach Anspruch 4, wobei ein Bild mindestens 8 Megapixel oder mindestens 8 RGB-Megapixel, bevorzugt mindestens 14 Megapixel oder mindestens 14 RGB-Megapixel, besonders bevorzugt mindestens 20 Megapixel oder mindestens 20 RGB-Megapixel umfasst.

6. Vorrichtung (100) nach einem der Ansprüche 3 bis 5, wobei die zweite Recheneinheit (121) mit der zweiten Kameraeinheit (111) über eine zweite Kameraverbindungsleitung (131) verbunden ist und dafür ausgelegt ist, die zweiten Bilddaten zu empfangen und, optional, zu bearbeiten.

7. Vorrichtung (100) nach einem der Ansprüche 3 bis 5, umfassend:
eine dritte Recheneinheit (122), die mit der zweiten Kameraeinheit (111) über eine zweite Kameraverbindungsleitung (131) verbunden ist, dafür ausgelegt, die zweiten Bilddaten zu empfangen und, optional, zu bearbeiten.

8. Vorrichtung (100) nach Anspruch 7, wobei die zweite Recheneinheit (121) und die dritte Recheneinheit (122) über eine zweite USB-Leitung (141) verbunden sind;
wobei die zweiten Bilddaten über die zweite USB-Leitung (141) an die zweite Recheneinheit (121) übertragen werden.

9. Vorrichtung (100) nach einem der vorhergehenden Ansprüche, wobei die erste USB-Schnittstelle über ein virtuelles Netzwerkgerät in das Netzwerk eingebunden ist.

10. Vorrichtung (100) nach Anspruch 9, wobei die maximale Burst Einstellung des virtuellen Netzwerkgeräts größer als 0, bevorzugt größer als oder gleich 10, besonders bevorzugt gleich 15 ist.

11. Vorrichtung (100) nach einem der vorhergehenden Ansprüche, wobei das Netzwerk von der ersten Recheneinheit (120) über ein erstes virtuelles Netzwerkinterface konfiguriert werden kann.

12. Vorrichtung (100) nach Anspruch 11, wobei die Maximum Transmission Unit (MTU) des ersten virtuellen Netzwerkinterface größer als 1500, bevorzugt größer als 7000, besonders bevorzugt 15300 konfiguriert ist.

13. Vorrichtung (100) nach einem der vorhergehenden Ansprüche, wobei das Netzwerk von der zweiten Recheneinheit (121) über ein zweites virtuelles Netzwerkinterface konfiguriert werden kann, optional wobei die Maximum Transmission Unit (MTU) des zweiten virtuellen Netzwerkinterface größer als 1500, bevorzugt größer als 7000, besonders bevorzugt 15300 konfiguriert ist.

14. Vorrichtung (100) nach einem der vorhergehenden Ansprüche, wobei die erste USB-Leitung (140) nach dem Standard USB 3.0 oder höher spezifiziert ist, insbesondere wobei die erste USB-Leitung (140) nach einem der Standards USB 3.0, USB 3.1 oder USB 3.2 spezifiziert ist.

15. Vorrichtung (200) zur Bearbeitung einer Materialbahn (10), umfassend:
die Materialbahn (10);
die Vorrichtung (100) zur Beobachtung und/oder Inspektion der Materialbahn (10) nach einem der vorhergehenden Ansprüche.
